## Europäisches Patentamt

## European Patent Office

## Office européen des brevets

(11) Publication number: **0 161 854**
**B1**

# EUROPEAN PATENT SPECIFICATION

(45) Date of publication of patent specification: **02.11.88**

(21) Application number: **85302998.1**

(22) Date of filing: **26.04.85**

(51) Int. Cl.⁴: **C 09 J 3/14, C 08 L 63/00, C 08 L 33/06, B 22 F 1/00**

(54) **Method of adhering metal alloy to metal sheet with resin composition.**

(30) Priority: **29.04.84 JP 87313/84**
**29.04.84 JP 87314/84**
**29.04.84 JP 87315/84**

(43) Date of publication of application:
**21.11.85 Bulletin 85/47**

(45) Publication of the grant of the patent:
**02.11.88 Bulletin 88/44**

(84) Designated Contracting States:
**DE FR GB**

(56) References cited:
**GB-A-1 548 226**

(73) Proprietor: **NITTO ELECTRIC INDUSTRIAL CO., LTD.**
**1-2, Shimohozumi 1-chome Ibaraki-shi Osaka 567 (JP)**

(72) Inventor: **Sakuramoto, Takahumi c/o Nitto Electric**
**Industrial Co Ltd. 1-2 Shimohozumi 1-chome Ibaraki-shi Osaka (JP)**
Inventor: **Tomigana, Takashi c/o Nitto Electric Industrial Co Ltd. 1-2 Shimohozumi 1-chome Ibaraki-shi Osaka (JP)**
Inventor: **Asoshina, Eisha c/o Nitto Electric Industrial Co Ltd. 1-2 Shimohozumi 1-chome Ibaraki-shi Osaka (JP)**
Inventor: **Ijichi, Ichiro c/o Nitto Electric Industrial Co Ltd. 1-2 Shimohozumi 1-chome Ibaraki-shi Osaka (JP)**
Inventor: **Kamei, Kiyohiro c/o Nitto Electric Industrial Co Ltd. 1-2 Shimohozumi 1-chome Ibaraki-shi Osaka (JP)**
Inventor: **Konishi, Toshiharu c/o Nitto Electric Industrial Co Ltd. 1-2 Shimohozumi 1-chome Ibaraki-shi Osaka (JP)**

(74) Representative: **Diamond, Bryan Clive et al Gee & Co. Chancery House Chancery Lane London WC2A 1QU (GB)**

The file contains technical information submitted after the application was filed and not included in this specification

## Description

This invention relates to a method of sintering a molding or sheet of a metal alloy to a metal substrate, by use of a synthetic resin binder composition.

For the purpose of providing an alloy layer on a metal substrate, the alloy, in the form of such a sheet of particles of alloy adhered together with binder, is placed on the substrate and the assembly is heated to a temperature at which the alloy melts or sinters onto the substrate surface. To hold such a sheet onto a substrate which is other than flat and horizontal it is necessary to fix the sheet to the substrate; but any adhesive force of the binder cannot support the weight of the metal powder sheet, whereby the metal powder sheet peels off or falls from the substrate; in particular, this tends to occur when sintering is performed of the metal sheet which suffers vibration or impact during conveying in a furnace (such as a mesh-belt type or pusher type continuous sintering furnace or a vacuum sintering furnace).

As an effective method for overcoming the above-described problem, we have, in EPA 85301264.9 (EP—A0154486) (and Japanese Pat. Appln. No. 34887/84) claimed a composition for such use, comprising a specific alkyl acrylate or methacrylate copolymer preferably with an adhesion-providing resin, which contains at least 30% by weight of non-volatile materials after non-oxidizing heating at 300°C for 80 minutes and a method of sintering to a metal substrate a sheet or molding of a metal alloy wherein a layer or film of the composition is interposed therebetween and (a) the assembly is heated to 150 to 400°C for at least 5 minutes in a non-oxidizing atmosphere so as to form from the composition an adhesive, and (b) continuing the heating until the metal alloy is sintered to the substrate and the adhesive disappears.

However, the need for the first heating step (a) to be within that specific temperature range (and preferably at 250° to 380°C) is inconvenient and tends to restrict the industrial application of this method. We have now devised a method which overcomes this problem and which does not require the aforesaid copolymer.

According to the present invention, we provide a method of sintering a metal alloy to a metal substrate, wherein the alloy is in the form of a molding or sheet formed from a mixture of the alloy and a synthetic resin binder, which comprises placing said sheet or molding on said substrate, interposing a composition comprising a mixture of a thermosetting resin and at least one member selected from finely powdered metal, a thermoplastic resin and an adhesive material, or a molded layer of the composition between the sheet and substrate, heating the assembly in a non-oxidizing atmosphere so as to form from the composition an adhesive, and continuing heating to the temperature at which the metal alloy is sintered to the substrate and at which the adhesive formed disappears and the amount of residual carbon in the composition is then at least 0.5% by wt., characterised in that said fixing composition also contains at least one member selected from finely powdered metal, a thermoplastic resin and an adhesive material.

When the aforesaid resin composition is interposed between a metal powder molding and a metal substrate and the molding is subjected to sintering treatment at a constant rate of temperature increase, after first hardening the thermosetting resin in the initial temperature raising stage of from about 120 to 250°C, a strong adhesive force caused thereby assists the adhesion and fixing of the metal powder molding onto the substrate, and further in the subsequent temperature raising stage, gaseous thermal decomposition products are released to form a carbon precursor, which assists the adhesion and fixing of the molding onto the base material in a temperature range of usually about 700°C at which the metal powder molding begins to be sintered.

A metal fine powder contained in the composition suppresses the rapid lowering of the viscosity of the composition during the melting stage prior to the hardening of the thermosetting resin, by the dispersion of the powder and provides a good effect to maintain the adhesion force of the molding on the surface of the base material at this stage. The metal fine powder also has the function of lowering the initiating temperature of sintering at the base material interface by the mutual action with the molding, and this is useful to maintain the adhesive force of the molding.

Therefore, when the metal molding is placed on a slanting or curved surface of a metal substrate or is stuck to the underside thereof and the molding is then subjected to sintering requiring applying vibration or impact to the molding during conveying in a sintering furnace, the composition of this invention prevents peeling off or falling of the metal powder molding during the sintering.

Thus, by interposing the fixing composition between the metal powder molding and the metal substrate, the desired metal coating strongly metal-to-metal bonded to the substrate can be formed without the specific sintering operation as we previously required, i.e. by applying the conventional sintering treatment employing a constant rate of temperature increase and without peeling off or falling off of the metal powder molding during the sintering treatment.

The most preferred thermosetting resin which can be used in this invention is an epoxy resin. Examples of the epoxy resin are a bisphenol A type of epoxy resin having an epoxy equivalent of from about 100 to 5,000, an ether ester type epoxy resin, a novolak type epoxy resin, an ester type epoxy resin, an alicyclic type epoxy resin, a glycidyl ether type epoxy resin containing nitrogen, etc. Of those epoxy resins, a bisphenol A type epoxy resin is preferred.

As a hardening agent for an epoxy resin, a heat-activative hardening agent which produces a hardening action by heating is used. In general, a hardening agent which is active in the temperature range of from about 80 to 200°C is suitable. Examples of the hardening agent which can be used are dicyandiamide, imidazoles, hydrazide compounds, urea derivatives, etc. The amount of the hardening agent is usually from about 1 to 15 parts by weight per 100 parts by weight of the epoxy resin.

Other usable thermosetting resins are phenolic resins and unsaturated polyester resins (with appropriate hardening agents) and urethane resins (formed from a polyisocyanate and polyol) which may be modified, e.g. an acryl-modified polyisocyanate and/or an acryl-modified polyol.

A metal fin powder present together with the thermosetting resin can be a metal fine powder of iron, nickel, cobalt, copper, chromium, or silver; of these, powder having a low sintering temperature is preferred. The metal fine powder has a particle size of about 10 μm or less, preferably from 0.1 to 1 μm.

The amount of the metal fine powder used is from about 0.5 to 100 parts by weight, preferably from 1 to 30 parts by weight, per 100 parts by weight of the thermosetting resin. If the amount thereof is too small, the desired effect described above cannot be obtained, and if the amount thereof is too large, the adhesion of the molding is not maintained.

In this invention, use of at least one of the metal fine powder, thermoplastic resin and adhesive material can additionally provide the following good effect.

These components have the function of further suppressing the rapid decrease of viscosity during the melting stage prior to the hardening of the thermosetting resin. Further, the adhesion-maintaining force of the molding can be further increased by the adhesive strength of the adhesive material.

Examples of the thermoplastic resin are a high molecular weight epoxy resin derived from bisphenol A and epichlorohydrin, a polyamide resin, an ethylenevinyl acetate copolymer, a polyvinyl butyral, a polyester resin, a polysulfone, polyketone and a butane-acrylonitrile copolymer. Of those resins, a high molecular weight epoxy resin, polyester resin, polyamide resin and ethylene-vinyl acetate copolymer are preferred.

As the adhesive material, a rubber-based or acryl-based adhesive polymer which is conventionally used in the adhesive composition or the polymer containing a tackifier can be used. Of those polymers, an adhesive comprising polymer of an alkyl ester of an acrylic or methacrylic acid is preferred.

The preferred examples of the adhesive are an acrylic copolymer comprising from about 80 to 99.5% by weight of an alkyl ester of (meth)acrylic acid having from 2 to 12 average carbon atoms in the alkyl moiety and from about 0.5 to 2% by weight of a copolymerizable monomer having a functional group in the molecule such as (meth)acrylic acid, maleic acid, 2-hydroxy (meth)-acrylic acid, glycidyl (meth)acrylate, N-methylol (meth)acrylamide, N,N-dimethylaminoethyl (meth)acrylate, etc., and a mixture comprising 100 parts by weight of the acrylic copolymer and from about 0.1 to 100 parts by weight of an adhesive property imparting resin such as an alkylphenol resin, a coumarone-indene resin, a polyterpene resin, a rosin resin, a petroleum resin or a polyvinyl ether resin.

The amount of the thermosetting resin and/or adhesive material used is from about 2 to 200 parts by weight, preferably 10 to 50 parts by weight, per 100 parts by weight of the thermosetting resin. If the amount thereof is too small, the effect by the use thereof cannot be obtained, and if the amount thereof is too large, a strong adhesive force by the hardening of the thermosetting resin cannot be expected.

The fixing composition of this invention may optionally also contain, if desired and necessary, a conventional hardening agent; a hardening accelerator; a xylene resin, paraffin wax, process oil or abietyl alcohol as a softening agent; calcium carbonate, silica or talc as a filler; dioctyl phthalate, dioctyl adipate, triphenyl phosphate or dibutyl phthalate as a plasticizer.

It is important that, after the fixing composition (interposed between a metal powder molding and a metal substrate) has been sintered, the amount of residual carbon is at least 0.5% by weight, so that the desired effect of this invention can be obtained; if the amount of residual carbon is less than 0.5% by weight, the improvement of the adhesive and fixing force of the metal powder molding on heating at high temperature cannot be obtained.

The establishment of the above-described amount of residual carbon can be easily made by appropriately selecting the type of the thermosetting resin or the types of the thermosetting resin and hardening agent, or by selecting the types and amounts of additives. It is particularly preferred that the amount of residual carbon is in the range of from 1.0 to 10% by weight.

It is desirable that the fixing composition is pressure-sensitively adhesive, but it is not essential; otherwise, by applying heat energy to the composition interposed between the metal powder molding and the metal substrate, temporary adhesion of the composition can be easily effected.

Now, the method of using the fixing composition is explained. Firstly, between the metal substrate and a metal powder molding there is interposed the composition of the invention, by previously forming a sheet of the composition or by coating at least one of the substrate and the molding with a layer of the composition.

The thickness of the sheet or layer of the composition is generally from about 5 to 50 μm, preferably about 10 to 30 μm. If the thickness is too thin, the desired effect is not obtained and if it is too thick, generation of gas at the interface between the base material and the molding becomes severe so as to reduce the fixing strength at sintering and the bonding strength after sintering.

The metal powder molding used can be formed by rolling a mixture of a metal powder and a synthetic resin-based binder into a sheet or similar article; a sheet thereof usually has thickness of from about 0.5 to 5 mm.

As the above-mentioned metal powder, various metal powders such as a self-melting alloy powder and an abrasion-resisting alloy powder can be used according to the property to be imparted to the surface of the metal base material. A representative example of the alloy powder is an Fe-M-C system eutectic alloy powder which is an abrasion-resisting alloy powder, wherein M contains at least one of Mo, B and P as the main component. Furthermore, M may further contain Cr, V, W, Nb, Ta or Ti as a secondary element and may contain other elements such as Si, Ni, Mn, etc. Such an eutectic alloy powder has the feature that the sintering temperature is relatively low, the liquid phase becomes generally from about 10 to 50% by volume in the temperature range of from about 1,000 to 1,150°C, and the liquid phase has an excellent wetting property for the metal base material.

In addition, it is preferred that the particle size of the alloy powder be generally about 150 Tyler mesh or less in view of the fact that the particle size influences the porosity after sintering. If the particle size is larger than the above value, it is difficult to form an alloy layer having a high density.

As the synthetic resin-based binder to be mixed with the above-described metal powder, a binder having a pressure-sensitive adhesive property is preferred. In particular, an acrylic polymer or copolymer composed of a (meth)acrylic alkyl ester or composed of the ester and a monomer copolymerizable therewith and an acrylic pressure-sensitive adhesive composition composed of the acrylic polymer or copolymer containing added thereto an adhesive property imparting resin such as an alkyl-phenolic resin, a rosin resin, a petroleum resin, a cumarone-indene resin, etc., are preferably used (e.g. as described in European Application No. 85301244.1 EP—A 154479).

The above-described synthetic resin-based binder is diluted with a suitable organic solvent such as acetone, toluene, methyl ethyl ketone, etc., the solution is kneaded with from about 10 to 100 parts by weight of the metal powder per 1 part by weight of the solid component thereof, the kneaded mixture is poured onto a mold having thereon a mold release paper and after evaporating the solvent, the mixture is molded into a sheet form or the like by passing it through molding rolls.

The metal powder molding is placed on a metal substrate with the fixing composition interposed therebetween as described above and is sintered in a non-oxidizing atmosphere. In this case, the temperature raising rate may be constant and it is unnecessary to maintain the system at a lower temperature for a definite period of time at sintering as in the previous EPA proposal. In the initial temperature raising stage, the thermosetting resin in the composition is first hardened to show a strong adhesive force and then converted into a carbon precursor which effectively contributes to the adhesion, the carbon precursor further contributing to stably adhere and fix the molding onto the base material until the temperature reaches the sintering temperature. Further, in this case, the metal fine powder in the composition prevents the lowering of the adhesive force during the melting stage prior to the hardening of the thermosetting resin and also lowers the initiating temperature of the sintering, thereby providing a good effect to the adhesion maintaining force.

The sintering processing is carried out under a non-oxidizing atmosphere because a desired alloy layer cannot be formed in an oxidizing atmosphere, because the molding is oxidized and suffers deterioration during the processing. The non-oxidizing atmosphere can be, e.g. a hydrogen gas atmosphere, nitrogen gas atmosphere or a vacuum.

When the temperature of the system is increased to the sintering temperature as described above and then the system is maintained at the sintering temperature for a definite period of time, the carbon precursor (residually at least 0.5 wt.%) is finally completely carbonized. Also, similar materials in the metal powder molding are carbonized and disappear. On the other hand, the metal component in the molding diffuses into the substrate to form a metal layer strongly bonded thereto.

The invention is described in more detail by reference to the following examples. All parts and percentages are by weight.

Example 1
70 parts of a bisphenol A type liquid epoxy resin (epoxy equivalent: 184 to 194), 30 parts of a bisphenol A type solid epoxy resin (epoxy equivalent: 600 to 700), and 70 parts of acetone were mixed, and 5 parts of dicyandiamide, 5 parts of iron powder having an average particle size of 1 μm or less, and 2 parts of dichlorophenyldimethylurea were further added thereto to form a solution as a fixing composition of this invention. The solution was coated on a mold release paper and dried to form a sheet having a thickness of 30 μm. The amount of residual carbon when the sheet was subjected to a carbonization treatment under the same condition as the subsequent sintering treatment was 7%.

In a separate step, after wet-kneading 58.8% of an eutectic alloy powder composed of 10.5% Mo, 2.5% Cr, 2.4% P and 3.6% C, rest being Fe and having a particle size of 150 Tyler mesh or less, 39.2% of a SUS 410 powder having a particle size of 150 Tyler mesh or less and further 2% of (meth)acrylic acid alkyl ester resin using acetone as a solvent, the kneaded mixture was rolled to form an alloy powder sheet having a thickness of 1 mm and a density of 4.65 g/cm³.

The sheet thus formed was cut into a size of 1 cm×1 cm and after sticking the above sheet of the fixing composition cut into the same size to the alloy powder sheet, the sheet was stuck to a vertical surface of a steel base material. Thereafter, the temperature of the system was increased to 1,080°C at a rate of 15°/min. in a hydrogen gas atmosphere and after maintaining the system at the temperature for 15 minutes, the system was gradually cooled.

Thus, an abrasion resisting alloy layer having a thickness of 0.8 to 0.82 mm, a hardness of 61 to 63 in

4

HRC, and a density of 7.6 to 7.7 g/cm³ and strongly bonded to the steel base material could be formed without causing falling of the metal powder sheet during the sintering treatment.

### Example 2

| | |
|---|---|
| Bisphenol A type liquid epoxy resin (epoxy equivalent: 184 to 194) | 80 parts |
| High molecular weight epoxy resin (molecular weight: 50,000—70,000) | 20 parts |
| Iron powder having a particle size of 1 μm or less | 50 parts |
| Dicyandiamine | 5 parts |
| Acetone | 100 parts |

A fixing composition of this invention was formed by mixing the above-described components in the same manner as in Example 1 and coated on a mold release paper and dried to form a sheet having a thickness of 15 μm. The amount of residual carbon when the sheet was subjected to a carbonization treatment under the same condition as the subsequent sintering treatment was 7.5%.

Separately, after wet-kneading 48.5% of the eutectic alloy powder as used in Example 1, 48.5% of a SUS 410 powder having a particle size of 150 Tyler mesh or less, and 3% of a (meth)acrylic acid alkyl ester using toluene as a solvent, the kneaded mixture was rolled to provide an alloy powder sheet having a thickness of 2 mm and a density of 4.8 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,090°C at a rate of 15°C/min. in a hydrogen gas atmosphere, and after maintaining the system at the temperature, the system was gradually cooled.

Thus, an abrasion-resisting alloy layer having a thickness of 1.6 to 1.65 mm, a hardness of 62 to 65 in HRC, and a density of 7.6 to 7.75 g/cm³ and strongly bonded to the steel base material could be formed without causing falling of the alloy powder metal during the sintering treatment.

### Example 3

| | |
|---|---|
| Bisphenol A type liquid epoxy resin (epoxy equivalent: 184 to 194) | 75 parts |
| Bisphenol A type solid epoxy resin (epoxy equivalent: 600 to 700) | 25 parts |
| Acetone | 60 parts |
| Dicyandiamide | 5 parts |
| Ni powder having an average particle size of 1 μm or less | 10 parts |
| Dichlorophenyldimethylurea | 2 parts |

A fixing composition of this invention was formed by mixing the above-described components in the same manner as in Example 1 and coated on a mold release paper and dried to form a sheet having a thickness of 20 μm. The amount of residual carbon when the sheet was subjected to a carbonization treatment under the same condition as the subsequent sintering treatment was 7%.

Separately, after wet-kneading 38.6% of the eutectic alloy powder as used in Example 1, 57.9% of a SUS 410 powder having a particle size of 150 Tyler mesh or less, and 3.5% of a (meth)acrylic acid alkyl ester using toluene as a solvent, the kneaded mixture was rolled to provide an alloy powder sheet having a thickness of 1.5 mm and a density of 4.8 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,100°C at a rate of 20°C/min in a hydrogen gas atmosphere, and after maintaining the system at the temperature, the system was gradually cooled.

Thus, an abrasion-resisting alloy layer having a thickness of 1.3 to 1.35 mm, a hardness of 60 to 62 in HRC, and a density of 7.5 to 7.7 g/cm³ and strongly bonded to the steel base material could be formed without causing falling of the alloy powder metal during the sintering treatment.

## Example 4

| | |
|---|---|
| Bisphenol A type liquid epoxy resin (epoxy equivalent: 184 to 194) | 70 parts |
| Bisphenol A type solid epoxy resin (epoxy equivalent: 600 to 700) | 10 parts |
| Thermoplastic polyester resin (specific gravity: 1.2, molecular weight: 20,000—25,000) | 20 parts |
| Dicyandiamide | 5 parts |

A fixing composition of this invention was formed by mixing the above-described components and press molded to form a sheet having a thickness of 15 μm. The amount of residual carbon when the sheet was subjected to a carbonization treatment under the same condction as the subsequent sintering treatment was 6.6%.

Separately, after wet-kneading 58.8% of the eutectic alloy powder as used in Example 1, 39.2% of a SUS 410 powder having a particle size of 150 Tyler mesh or less, and 2% of a (meth)acrylic acid alkyl ester using toluene as a solvent, the kneaded mixture was rolled to provide an alloy powder sheet having a thickness of 1 mm and a density of 4.65 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,080°C at a rate of 15°C/min in a hydrogen gas atmosphere, and after maintaining the system at the temperature, the system was gradually cooled.

Thus, an abrasion-resisting alloy layer having a thickness of 0.8 to 0.82 mm, a hardness of 61 to 63 in HRC, and a density of 7.6 to 7.7 g/cm³ and strongly bonded to the steel base material could be formed without causing falling of the alloy powder metal during the sintering treatment.

## Example 5

| | |
|---|---|
| Bisphenol A type liquid epoxy resin (epoxy equivalent: 184 to 194) | 65 parts |
| Polyamide copolymer resin (softening point: 70—80°C) | 35 parts |
| Dicyandiamide | 5 parts |
| Dichlorophenyldimethylurea | 1 part |

A mixing composition of this invention was formed by mixing the above-described components and press molded to form a sheet having a thickness of 25 μm. The amount of residual carbon when the sheet was subjected to a carbonization treatment under the same condtion as the subsequent sintering treatment was 6.2%.

After wet-kneading 38.6% of the eutectic alloy powder as used in Example 1, 57.9% of a SUS 410 powder having a particle size of 150 Tyler mesh or less, and 3.5% of a (meth)acrylic acid alkyl ester using toluene as a solvent, the kneaded mixture was rolled to provide an alloy powder sheet having a thickness of 1.5 mm and a density of 4.8 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,100°C at a rate of 10°C/min in a hydrogen gas atmosphere, and after maintaining the system at the temperature, the system was gradually cooled.

Thus, an abrasion-resisting alloy layer having a thickness of 1.3 to 1.35 mm, a hardness of 60 to 62 in HRC, and a density of 7.5 to 7.7 g/cm³ and strongly bonded to the steel base material could be formed without casing falling of the alloy powder metal during the sintering treatment.

## Example 6

| | |
|---|---|
| Isooctyl acrylate | 97.9 parts |
| Glycidyl methacrylate | 0.1 part |
| Acrylic acid | 2 parts |
| Toluene | 120 parts |
| Benzoyl peroxide | 0.2 part |

The above components were charged into a reactor and polymerized at 75°C for 8 hours to obtain a solution containing an acrylic copolymer having a weight average molecular weight of 500,000. A fixing composition of this invention was formed by mixing 100 parts of the solution thus obtained with a mixed solution of 20 parts of a bisphenol A type liquid epoxy resin (epoxy equivalent: 184—194), 7 parts of a bisphenol A type solid epoxy resin (epoxy equivalent: 600—700), 50 parts of acetone, 1.5 parts of dicyandiamide and 0.5 part of dichlorophenyldimethylurea and coated on a mold release paper and dried to form a sheet having a thickness of 20 μm. The amount of residual carbon when the sheet was subjected to a carbonization treatment under the same condition as the subsequent sintering treatment was 3%.

After wet-kneading 38.6% of the eutectic alloy powder as used in Example 1, 57.9% of a SUS 410 powder having a particle size of 150 Tyler mesh or less, and 3.5% of a (meth)acrylic acid alkyl ester using acetone as a solvent, the kneaded mixture was rolled to provide an alloy powder sheet having a thickness of 1.5 mm and a density of 4.8 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,100°C at a rate of 10°C/min in a hydrogen gas atmosphere, and after maintaining the system at the temperature, the system was gradually cooled.

Thus, an abrasion-resisting alloy layer having a thickness of 1.3 to 1.35 mm, a hardness of 60 to 62 in HRC, and a density of 7.5 to 7.7 g/cm³ and strongly bonded to the steel base material could be formed without causing falling of the alloy powder metal during the sintering treatment.

Example 7

| | |
|---|---|
| Bisphenol A type liquid epoxy resin (epoxy equivalent: 184 to 194) | 70 parts |
| Bisphenol A type solid epoxy resin (epoxy equivalent: 600 to 700) | 30 parts |
| Isoprene rubber | 100 parts |
| Terpene-phenol resin (number average molecular weight: 1,000—2,000) | 90 parts |
| Dicyandiamide | 5 parts |
| Dichlorophenyldimethylurea | 2 parts |
| Anti-aging agent | 3 parts |
| Acetone | 50 parts |

A fixing composition of this invention was formed by mixing the above-described components and coated on a mold release paper and dried to form a sheet having a thickness of 25 μm. The amount of residual carbon when the sheet was subjected to a carbonization treatment under the same condition as the subsequent sintering treatment was 3%.

After wet-kneading 58.8% of the eutectic alloy powder as used in Example 1, 39.2% of a SUS 410 powder having a particle size of 150 Tyler mesh or less, and 2% of a (meth)acrylic acid alkyl ester using toluene as a solvent, the kneaded mixture was rolled to provide an alloy powder sheet having a thickness of 1 mm and a density of 4.65 g/cm³.

The sheet thus formed was cut into a size of 1 cm×1 cm and after sticking the above sheet of the fixing composition cut into the same size to the alloy powder sheet, the sheet was stuck to a vertical surface of a metal base material. Thereafter, the temperature of the system was increased to 1,080°C at a rate of 20°C/min in a hydrogen gas atmosphere, and after maintaining the system at the temperature, the system was gradually cooled.

Thus, an abrasion-resisting alloy layer having a thickness of 0.8 to 0.82 mm, a hardness of 61 to 63 in HRC, and a density of 7.6 to 7.7 g/cm³ and strongly bonded to the steel base material could be formed without causing falling of the alloy powder metal during the sintering treatment.

**Claims**

1. A method of sintering a metal alloy to a metal substrate, wherein the alloy is in the form of a molding or sheet formed from a mixture of the alloy and a synthetic resin binder, which comprises placing said sheet or molding on said substrate, interposing a fixing composition comprising a thermosetting resin or a molded layer of the composition between the sheet and substrate, heating the assembly in a non-oxidizing atmosphere so as to form from the composition an adhesive, and continuing heating to the temperature at which the metal alloy is sintered to the substrate and at which the adhesive formed disappears and the amount of residual carbon in the composition is then at least 0.5% by wt, characterised in that said fixing composition also contains at least one member selected from finely powdered metal, a thermoplastic resin and an adhesive material.

2. A method as claimed in Claim 1, wherein the thermosetting resin is an epoxy resin.

3. A method as claimed in Claim 1 or 2, wherein the metal powder is of iron, nickel, cobalt, copper, chromium or silver and has a particle size of 10 μm or less.

4. A method as claimed in Claim 1 or 2, wherein the thermoplastic resin is a high molecular weight epoxy resin, a polyamide resin, a polyester resin or a copolymer of ethylene and vinyl acetate.

5. A method as claimed in Claim 1 or 2, wherein the adhesive material is an adhesive containing a polymer of an alkyl ester of acrylic acid or methacrylic acid.

6. A method as claimed in any preceding claim, wherein the amount of residual carbon in the composition after the sintering is from 1.0 to 10% by weight.

7

# 0 161 854

7. A method as claimed in any preceding claim, wherein the composition is in the form of a sheet or layer 5 to 50 millimicrons thick.

8. A method as claimed in any preceding claim, wherein the composition includes an organic solvent before the heating.

9. A method as claimed in any preceding claim, wherein the alloy is a multi-component eutectic alloy powder containing iron, carbon and at least one of molybdenum, bismuth and phosphorus and the heating is at a substantially constant rate of temperature increase, up to 1,000 to 1,150°C.


**Patentansprüche**

1. Verfahren zum Sintern einer Metallegierung an ein Metallsubstrat, worin die Legierung in Form eines Formteils oder einer Platte ist, gebildet aus einer Mischung der Legierung und eines synthetischen Harzbindemittels, bei dem die Platte oder das Formteil auf das Substrat gegeben wird, eine Fixierzusammensetzung, die ein wärmehärtebares Harz oder eine Formeschicht der Zusammensetzung umfaßt, zwischen die Platte und das Substrat gegeben wird, die Anordnung in einer nicht oxidierenden Atmosphäre erwärmt wird, um aus der Zusammensetzung einen Haft- bzw. Klebstoff zu bilden, und das Erwärmen auf die Temperatur, bei der die Metallegierung an das Substrat gesintert wird und bei der der gebildete Klebstoff verschwindet und die Menge des Restkohlenstoffs in der Zusammensetzung dann wenigstens 0,5 Gew.-% beträgt, forgeführt wird, dadurch gekennzeichnet, daß die Fixierzusammensetzung ebenfalls wenigstens einen Bestandteil, gewählt aus feingepulvertem Metall, einem thermoplastischen Harz und einem Klebematerial, enthält.

2. Verfahren nach Anspruch 1, worin das wärmehärtbare Harz ein Epoxyharz ist.

3. Verfahren nach Anspruch 1 oder 2, worin das Metallpulver Eisen, Nickel, Kobalt, Kupfer, Chrom oder Silber ist und eine Teilchengröße von 10 µm oder weniger besitzt.

4. Verfahren nach Anspruch 1 oder 2, worin das thermoplastische Harz ein Epoxyharz mit hohem Molekulargewicht, ein Polyamidharz, ein Polyesterharz oder ein Copolymer aus Ethylen und Vinylacetat ist.

5. Verfahren nach Anspruch 1 oder 2, worin das Klebematerial ein Klebstoff, enthaltend ein Polymer aus einem Alkylester von Acrylsäre oder Methacrylsäure, ist.

6. Verfahren nach einem der vorhergehenden Ansprüche, worin die Menge des Restkohlenstoffs in der Zusammensetzung nach dem Sintern 1,0 bis 10 Gew.-% beträgt.

7. Verfahren nach einem der vorhergehenden Ansprüche, worin die Zusammensetzung in Form einer Platte oder Schicht mit einer Dicke von 5 bis 50 mµ ist.

8. Verfahren nach einem der vorhergehenden Ansprüche, worin die Zusammensetzung ein organisches Lösungsmittel vor dem Erwärmen einschließt.

9. Verfahren nach einem der vorhergehenden Ansprüche, worin die Legierung ein eutektisches Mehrkomponentenlegierungspulver, enthaltend Eisen, Kohlenstoff und wenigstens einen Bestandteil aus Molybdän, Wismut und Phosphor, ist und das Erwärmen bei einer im wesentlichen konstanten Temperaturerhöhungsrate bei bis zu 1000 bis 1150°C erfolgt.


**Revendications**

1. Un procédé de frittage d'un alliage métallique sur un support métallique, dans lequel l'alliage est sous la forme d'un moulage ou d'une feuille formés à partie d'un mélange de l'alliage et d'un liant résineux, qui consiste à placer ladite feuille ou ledit mélange sur ledit support, à intercaler entre la feuille et le support une composition de fixation comprenant une résine thermodurcissable ou une couche moulée de la composition, ù chauffer l'ensemble dans une atmosphère non oxydante de manière à former un adhésif à partir de la composition, et à continuer le chauffage jusqu'à la température où l'alliage métallique est fritté sur le support et à laquelle l'adhésif formé disparaît et la quantite de carbone résiduel dans la composition est alors d'au moins 0,5% en poids, caractérisé en ce que ladite composition de fixation comprend au moins un composant choisi parmi un métal finement pulvérisé, une résine thermoplastique et une matière adhésive.

2. Un procédé selon la revendication 1, dans lequel la résine thermodurcissable est une résine époxydique.

3. Un procédé selon la revendication 1 ou 2, dans lequel la poudre métallique est une poudre de fer, de nickel, de cobalt, de cuivre, de chrome ou d'argent et a une dimension de particules de 10 µm ou moins.

4. Un procédé selon la revendication 1 ou 2, dans lequel la résine thermoplastique est une résine époxidique de haut poids moléculaire, une résine de polyamide, une résine de polyester ou un copolymère d'éthylène et d'acétate de vinyle.

5. Un procédé selon la revendication 1 ou 2, dans lequel la matière adhésive est un adhésif contenant un polymère d'un ester d'alkyle d'acide acrylique ou méthacrylique.

6. Un procédé selon l'une quelconque des revendications précédentes, dans lequel la quantité de carbone résiduel dans la composition après le frittage est de 1,0 à 10% en poids.

7. Un procédé selon l'une quelconque des revendications précédentes, dans lequel la composition est sous la forme d'une feuille ou couche de 5 à 50 millimicrons d'épaisseur.

8

8. Un procédé selon l'une quelconque des revendications précédentes, dans lequel la composition comprend un solvant organique avant le chauffage.

9. Un procédé selon l'une quelconque des revendications précédentes, dans lequel l'alliage est une poudre d'alliage eutectique multicomposant contenant du fer, du carbone et au moins un élément choisi parmi le molybdène, le bismuth et le phosphore et le chauffage s'effectue à une vitesse pratiquement constante d'élévation de la température, jusqu'à 1 000 à 1 150°C.